# EUROPÄISCHE PATENTSCHRIFT

(11) **EP 3 991 892 B1**
(45) Veröffentlichungstag und Bekanntmachung des Hinweises auf die Patenterteilung: **18.11.2026**
(21) Anmeldenummer: 21187338.5
(22) Anmeldetag: 23.07.2021
(51) Int. Cl.: B23B 29/034

(54) **ZERSPANUNGSWERKZEUG MIT EINER STELLEINRICHTUNG**
CUTTING TOOL WITH A POSITIONING DEVICE
OUTIL D'ENLÈVEMENT DE MATIÈRE DOTÉ D'UN DISPOSITIF DE RÉGLAGE

(30) Priorität: 27.10.2020 DE 102020213481
(43) Veröffentlichungstag der Anmeldung: 04.05.2022
(73) Patentinhaber: Gühring KG, 72458 Albstadt (DE)
(72) Erfinder: Heckel, Gerd, 90617 Puschendorf (DE); Hollfelder, Hans-Peter, 90768 Fürth (DE); Thanner, Jürgen, 91161 Hilpoltstein (DE)
(74) Vertreter: Winter, Brandl - Partnerschaft mbB

(56) Entgegenhaltungen:
- DE-A1- 102017 213 063
- DE-B- 1 299 493
- US-A1- 2020 290 129
- US-B2- 10 569 340

## Beschreibung

Die Erfindung betrifft ein Zerspanungswerkzeug gemäß Oberbegriff des Anspruchs 1.

Ein derartiges Zerspanungswerkzeug ist beispielsweise aus der DE 10 2017 213 063 A1 bekannt. Das in der Druckschrift gezeigte Zerspanungswerkzeug hat einen um eine Drehachse drehantreibbaren Grundkörper, wenigstens einen am Grundkörper radial einstellbar angeordneten Schneidenträger und eine Stelleinrichtung zur Einstellung der Lage des Schneidenträgers gegenüber dem Grundkörper. Der Schneidenträger ist in einer Führungsaussparung im Grundkörper quer zur Drehachse verschiebbar angeordnet. Die Stelleinrichtung weist ein im Grundkörper quer zur Drehachse und quer zur Verschieberichtung des Schneidenträgers verstellbares Stellelement auf, an dem der Schneidenträger durch eine in den Schneidenträger integrierte Justiereinrichtung justierbar abgestützt ist. Des Weiteren ist der Schneidenträger mit einer Traverse verbunden, die über Druckfedern am Grundkörper abgestützt ist und für eine Verdrehsicherung des Schneidenträgers in der Führungsaussparung sorgt.

Durch die federnde Lagerung der Traverse gegenüber dem Grundkörper kann der Schneidenträger über die Justiereinrichtung relativ zum Grundkörper lagegenau justiert werden, da die Druckfedern ständig eine Kraft auf eine am Stellelement abgestützte Stellschraube in Richtung des Stellelements ausüben. Andererseits kann die federnde Lagerung - auch bei der Verwendung von Druckfedern mit sehr hoher Steifigkeit - dafür sorgen, dass sich im Betrieb des Zerspanungswerkzeugs, insbesondere bei hohen Drehgeschwindigkeiten des Werkzeugs, aufgrund von Fliehkräften die relative Lage des Schneidenträgers und somit eines am Schneidenträger befestigten Schneidelements gegenüber dem Grundkörper ändert. Diese relative Lageänderung kann zu Bearbeitungsungenauigkeiten führen.

Die Druckschriften US 2020/290129 A1, US 10 569 340 B2 und DE 12 99 493 B offenbaren weitere Zerspanungswerkzeuge.

Ausgehend von dem oben diskutierten Stand der Technik liegt der Erfindung somit die Aufgabe zugrunde, ein Zerspanungswerkzeug mit einem um eine Drehachse drehantreibbaren Grundkörper, wenigstens einem am Grundkörper radial einstellbar angeordneten Schneidenträger und einer Stelleinrichtung zur Einstellung der Lage des Schneidenträgers gegenüber dem Grundkörper bereitzustellen, mit dem auch bei hohen Werkzeugdrehgeschwindigkeiten Fliehkräfte im Betrieb aufgefangen werden können und eine hohe Bearbeitungsqualität erreicht wird.

Diese Aufgabe wird durch ein Zerspanungswerkzeug mit den Merkmalen des Anspruchs 1 gelöst. Vorteilhafte oder bevorzugte Weiterbildungen sind jeweils Gegenstand abhängiger Ansprüche.

Ein erfindungsgemäßes Zerspanungswerkzeug wird bevorzugt zur Bohrungsnachbearbeitung oder Bohrungsfeinbearbeitung, im Besonderen einer sogenannten Lagergasse eingesetzt. Derartige Werkzeuge werden beispielsweise in der Automobilindustrie eingesetzt, um Bohrungen mehrerer in Reihe angeordneter Lagerstege einer Lagergasse zum Lagern einer Welle, beispielsweise einer Kurbelwelle oder Nockenwelle, auf ein Durchmesserendmaß zu bearbeiten. Speziell in diesem Falle ist das Zerspanungswerkzeug vorzugsweise mehrschneidig ausgebildet, um mehrere Lagerstege einer Lagergasse synchron bearbeiten zu können, so dass am Grundkörper des Zerspanungswerkzeugs mehrere Schneidenträger in den Abständen der Lagerstege entsprechenden axialen Abständen, vorzugsweise in einer Reihe, angeordnet sind.

Das erfindungsgemäße Zerspanungswerkzeug weist einen um eine Drehachse drehantreibbaren Grundkörper, wenigstens einen am Grundkörper radial einstellbar angeordneten Schneidenträger und eine Stelleinrichtung zur Einstellung der Lage des Schneidenträgers gegenüber dem Grundkörper auf. Der Schneidenträger ist in einer Führungsaussparung im Grundkörper radial zur Drehachse verschiebbar angeordnet. Die Stelleinrichtung weist ein im Grundkörper quer zur Drehachse und quer zur Verschieberichtung des Schneidenträgers verstellbares Stellelement auf, an dem der Schneidenträger durch eine in den Schneidenträger integrierte Justiereinrichtung justierbar abgestützt ist. Der Schneidenträger weist ein Fixierelement auf, das den lagejustierten Schneidenträger gegenüber dem Grundkörper fixiert. Das Fixierelement ist am Stellelement abgestützt.

Mit dem erfindungsgemäßen Zerspanungswerkzeug ist es möglich, den Schneidenträger nach seiner Lagejustierung gegenüber dem Grundkörper zu fixieren. Dadurch können im Vergleich zu einem Werkzeug, wie es z.B. aus der eingangs diskutierten DE 102017213063 A1 bekannt ist, bei dem der Schneidenträger lediglich federnd gegenüber dem Grundkörper abgestützt ist, im Betrieb des Zerspanungswerkzeugs entstehende Fliehkräfte aufgefangen werden. Insbesondere bei hoher Drehgeschwindigkeit bzw. Drehzahl des Werkzeugs kann sich ohne die Lagefixierung des Schneidenträgers gegenüber dem Grundkörper aufgrund der Fliehkräfte die relative Lage des Schneidelements gegenüber dem Grundkörper bzw. dem Zerspanungswerkzeug ändern, wodurch Bearbeitungsungenauigkeiten entstehen können. Bei fixierter Lage des Schneidenträgers gegenüber dem Grundkörper kann hingegen eine hohe Bearbeitungsqualität gewährleistet werden. Wie später beschrieben, kann des Weiteren das Stellelement so ausgebildet sein, dass auch bei festgelegter Lage des Schneidenträgers gegenüber dem Grundkörper die Position des Schneidenträgers über die Justiereinrichtung verstellt werden kann.

Durch die insbesondere radiale Verschiebbarkeit des Schneidenträgers und somit der an diesem angeordneten Schneide (Schneidelements) lässt sich eine präzise Ein- und Verstellung des Schneidelements in Bezug auf den Grundkörper und ein spanend zu bearbeitendes Werkstück erreichen. Selbstverständlich kann ein Schneidenträger mehrere Schneiden (Schneidelemente) umfassen.

Insbesondere zur Bearbeitung mehrerer Lagerstege einer Lagegasse kann das erfindungsgemäße Zerspanungswerkzeug eine Vielzahl von Schneidenträgern aufweisen, die jeweils in einer entsprechenden Führungsaussparung im Grundkörper quer zur Drehachse, vorzugsweise radial, verschiebbar angeordnet und an einem dem jeweiligen Schneidenträger zugeordneten Stellelement abgestützt sind. D.h. jedem Schneidenträger ist eine Stelleinrichtung mit einem Stellelement zugeordnet, sodass die Schneidenträger individuell einstellbar sind, wobei das Stellelement senkrecht zur Drehachse des Grundkörpers und senkrecht zur Verschieberichtung des Schneidenträgers verstellbar ist. Dabei können die Schneidenträger in gleichen oder unterschiedlichen Abständen zur Drehachse des Grundkörpers lageeinstellbar angeordnet sein. Auch können die Abstände zwischen den Schneidenträgern in Längsrichtung des Zerspanungswerkzeugs gleichmäßig oder variabel sein.

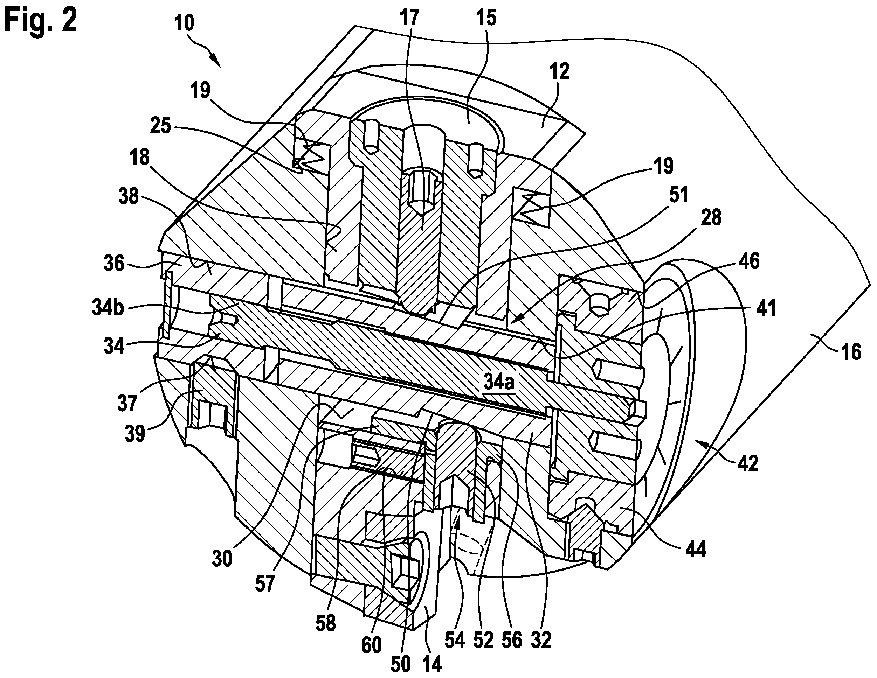

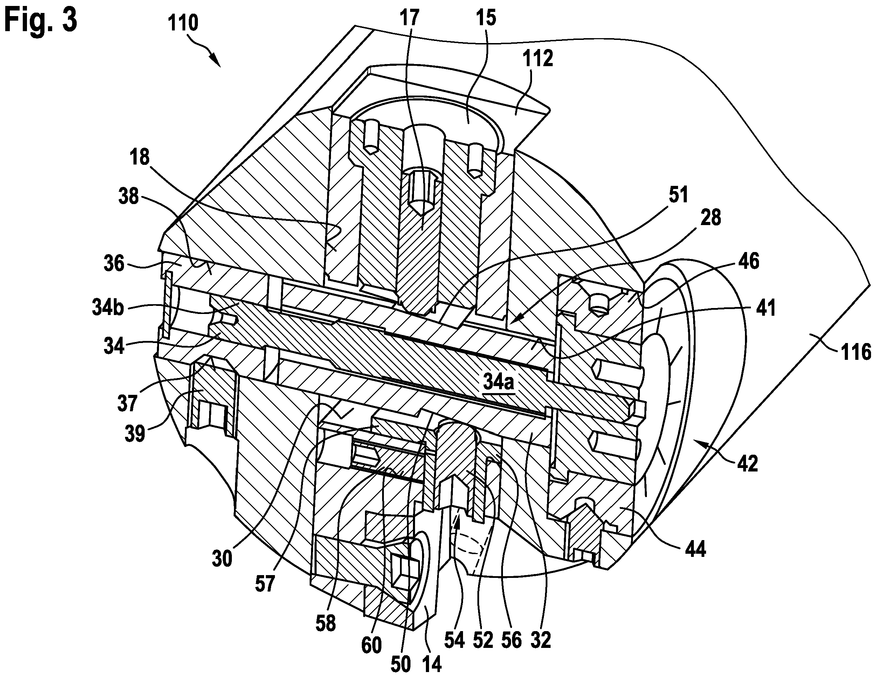

Das Stellelement kann insbesondere eine dem Fixierelement zugeordnete Schrägfläche (Schrägfläche 51 in Fig. 2 oder 3) aufweisen, an der das Fixierelement abgestützt ist. Wie oben beschrieben, ist es dadurch möglich, die Lage des Schneidenträgers gegenüber dem Grundkörper auch bei an der Schrägfläche des Stellelements abgestütztem Fixierelement einzustellen, wenn das Stellelement quer zur Verschieberichtung des Schneidenträgers verstellt wird, sofern die in den Schneidenträger integrierte Justiereinrichtung ebenfalls an einer der Justiereinrichtung zugeordneten Schrägfläche (Steuerschräge 50 in Fig. 2 oder 3) abgestützt ist, die am Stellelement gegenüber und parallel zu der dem Fixierelement zugeordneten Schrägfläche ausgebildet ist.

Das Fixierelement kann aus einem Gewindestift gebildet sein. Der Gewindestift kann ein Mitnahmeprofil, z.B. einen Innensechskant, zum Ansetzen eines Werkzeugs, z.B. eines Innensechkantschlüssels, aufweisen, so dass der Gewindestift schnell und einfach von einem Benutzer des Werkzeugs relativ zum Schneidenträger verstellt werden kann.

Der Gewindestift kann mit einer im Schneidenträger festgelegten Buchse verschraubt sein. Die Buchse ist vorzugsweise mit dem Schneidenträger verpresst.

Der bzw. der jeweilige Schneidenträger ist vorzugsweise formschlüssig in der ihm zugeordneten Führungsaussparung des Grundkörpers aufgenommen. Des Weiteren ist der jeweilige Schneidenträger bevorzugt verdrehsicher in der Führungsaussparung aufgenommen und kann als Bohreinsatz ausbildet sein, der in die Führungseinsparung eingesetzt ist. Dabei erstreckt sich die Führungsaussparung senkrecht zur Drehachse des Grundkörpers des erfindungsgemäßen Zerspanungswerkzeugs in Verschieberichtung des Schneidenträgers. Die Verdrehsicherung des Schneidenträgers in der Führungsaussparung kann dadurch erreicht werden, dass der Schneidenträger ein senkrecht zu seiner Erstreckungsrichtung rechteckiges Querschnittsprofil aufweist.

Gemäß bevorzugter Ausführungsform ist die Führungsaussparung als Durchgangsaussparung, insbesondere als Durchgangsbohrung, ausgebildet. In diesem Fall weist der Schneidenträger bevorzugt einen sich quer (senkrecht) zur Drehachse des Grundkörpers und quer (senkrecht) zur Verschieberichtung des Schneidenträgers erstreckenden Durchbruch zur Aufnahme des Stellelements der dem Schneidenträger zugeordneten Stelleinrichtung auf. In der die Führungsaussparung umgebenden Wand des Grundkörpers sind Aufnahmeöffnungen (auch Ausnehmungen oder Aufnahmen genannt) zur Aufnahme der Stelleinrichtung bzw. von deren Enden/Endbereichen vorgesehen.

An dem Schneidenträger kann wenigstens ein Schneidelement vorgesehen sein, welches radial nach außen absteht. Bei dem Schneidelement handelt es sich insbesondere um eine Schneidplatte mit einer Schneide, vorzugsweise um eine Wendeschneidplatte. Das Schneidelement kann in dem am Schneidenträger vorgesehenen Sitz lageeinstellbar, z.B. durch Verschraubung, Klemmung, etc., oder lagefest, z.B. durch Kleben oder Löten, aufgenommen sein.

Der Schneidenträger ist vorzugsweise gegenüber dem Grundkörper elastisch, vorzugsweise federnd, abgestützt, sodass er senkrecht zur Drehachse des Grundkörpers verschiebbar ist. Durch die federnde Abstützung des Schneidenträgers gegenüber dem Grundkörper kann eine sehr genaue Lagejustierung des Schneidenträgers vorgenommen werden. Bei noch nicht betätigtem Fixierelement kann durch die Federung eine Kraft auf den Schneidenträger ausgeübt werden, so dass eine später beschriebene Stellschraube der Justiereinrichtung in jeder Drehlage des Zerspanungswerkzeugs gegen das Stellelement gedrückt wird. Somit lässt sich der Schneidenträger zunächst durch Verstellung des Stellelements über die Stelleinrichtung und Einstellung mittels Justiereinrichtung lagejustieren und anschließend durch Betätigung des Fixierelements gegenüber dem Grundkörper fixieren.

Die Stelleinrichtung des erfindungsgemäßen Zerspanungswerkzeugs weist vorzugsweise einen Gewindetrieb zum Antreiben des Stellelements der Stelleinrichtung auf. Gemäß bevorzugter Ausgestaltung ist das Stellelement aus einer Gewindehülse gebildet, welche eine Steuerschräge aufweist, an welcher der Schneidenträger abgestützt ist. Die Gewindehülse ist in ihrer axialen Richtung, d.h. quer (senkrecht) zur Drehachse des Grundkörpers und quer (senkrecht) zur Verschieberichtung des Schneidenträgers, verschiebbar. Der Gewindetrieb weist eine Antriebsspindel auf, welche am Grundkörper gelagert und mit der Gewindehülse verschraubt ist. Der Gewindetrieb weist bevorzugt ferner eine im Grundkörper beabstandet zur Gewindehülse festgelegte Gewindebuchse (auch Lagerbuchse genannt) auf. Die Gewindebuchse ist feststehend im Grundkörper angeordnet. Die Gewindebuchse ist insbesondere aus herstellungstechnischen Gründen anstelle einer Gewindebohrung im den Schneidenträger umgebenden Grundkörper vorgesehen. Die Steigung der Steuerschräge entspricht vorzugsweise der Steigung der Schrägfläche. Wenn sich ein Stellglied bzw. eine Stellschraube der Justiereinrichtung an der Steuerschräge des Stellelements abstützt, lässt sich somit auch bei betätigtem Fixierelement die relative radiale Lage des Schneidenträgers gegenüber dem Grundkörper über die Stelleinrichtung einstellen.

Die Antriebsspindel ist vorzugsweise als Differentialgewindespindel ausgebildet, welche mit einem ersten Gewindeabschnitt mit der Gewindehülse und mit einem zweiten Gewindeabschnitt mit der Gewindebuchse verschraubt ist. Gewindehülse und Gewindebuchse sind auf die Differentialgewindespindel aufgeschraubt. Der erste Gewindeabschnitt und der zweite Gewindeabschnitt können verschiedene Gewindesteigungen (Ganghöhen), aber gleiche Gewinderichtungen (Gangrichtungen) aufweisen. Bei einer Betätigung der Differentialgewindespindel bewegt sich die Gewindehülse in Richtung der Spindelachse, d.h. senkrecht zur Drehachse des Grundkörpers und senkrecht zur Verschieberichtung des Schneidenträgers um eine Strecke, die dem Steigungsunterschied der beiden Gewindeabschnitte der Differentialgewindespindel entspricht. Zwischen der Gewindehülse und der Gewindebuchse kann eine Druckfeder vorgesehen sein, um einerseits ein Gewindespiel zwischen dem Außengewinde des ersten Gewindeabschnitts der Differentialgewindespindel und dem Innengewinde der Gewindehülse und andererseits ein Gewindespiel zwischen dem Außengewinde des zweiten Gewindeabschnitts der Differentialgewindespindel und dem Innengewinde der Gewindebuchse zu reduzieren.

Antriebsspindel, Gewindehülse und Gewindebuchse erstrecken sich senkrecht zur Drehachse des Grundkörpers und senkrecht zur Verschieberichtung des Schneidenträgers. Die Antriebsspindel und die Gewindehülse erstrecken sich durch den im Schneidenträger vorgesehenen Durchbruch, welcher insbesondere einen im Wesentlichen quadratischen oder rechteckigen Querschnitt aufweisen kann.

Der bzw. jeder Stelleinrichtung des erfindungsgemäßen Zerspanungswerkzeugs ist vorzugsweise ein am Grundkörper drehbeweglich gehaltenes Betätigungselement zugeordnet, das mit der Antriebsspindel bzw. der Differentialgewindespindel drehfest und insbesondere axialbeweglich in Eingriff steht und der Drehbetätigung der Antriebsspindel bzw. der Differentialgewindespindel dient. Das Betätigungselement umfasst vorzugsweise einen sogenannten Skalenring, welcher beispielsweise eine Skalierung von 10 Marken/Teilstrichen aufweist, sodass eine Einstellgenauigkeit von 0,001 mm im Halbdurchmesser präzise realisiert werden kann. Das Betätigungselement bzw. dessen Skalenring ist vorzugweise mittels eines Federrings am Grundkörper des erfindungsgemäßen Zerspanungswerkzeugs befestigt und stellt zugleich die Längskupplung der Antriebsspindel bzw. der Differentialgewindespindel dar.

Mittels der Stelleinrichtung des erfindungsgemäßen Zerspanungswerkzeugs ist der Schneidenträger zwischen einer eingesteuerten Position, in der das am Schneidenträger gehaltene Schneidelement auf einem minimalen Durchmesser bezüglich einer Dreh- oder Längsmittelachse des Grundkörpers liegt, in radialer Richtung beispielsweise in einem definierten (geringen) Abstand außerhalb (beispielsweise einem Abstand von 0,2 mm), auf Höhe oder innerhalb des Außenumfangs des Grundkörpers, und einer ausgesteuerten Position, in der das am Schneidenträger gehaltene Schneidelement auf einem maximalen Radius, d.h. auf einem vorgegeben Nenndurchmessermaß bezüglich der Dreh- oder Längsmittelachse des Grundkörpers liegt, d.h. in einem (großen) radialen Abstand (beispielsweise einem Abstand von 0,5 mm) über dem Außenumfang des Grundkörpers, radial verstellbar. Ein Verstellbereich des am Schneidenträger gehaltenen Schneidelements zwischen 0,2 mm und 0,5 mm im Bearbeitungsdurchmesser kann beispielsweise mit Hilfe des Betätigungselements erreicht werden, das einen Skalenring mit 10 Teilstrichen an dessen Umfang aufweist, wobei der Zustellschritt zwischen 0,002 mm und 0,005 mm im Bearbeitungsdurchmesser beträgt und maximal 10 Umdrehungen des Skalenrings erforderlich sind. Dadurch ist eine stufenlose Kleiner- und Größerverstellung in dem genannten Verstellbereich möglich.

Die Justiereinrichtung weist bevorzugt ein vorzugsweise als Stellschraube, insbesondere als Abdrückschraube, ausgebildetes Stellglied auf, über welches der Schneidenträger an dem Stellelement, insbesondere an der Steuerschräge der das Stellelement bildenden Gewindehülse, abstützt ist. Die Stellschraube ist in einer vorzugsweise geschlitzten Gewindebuchse angeordnet, deren Gewindespiel mittels eines Gewindestifts ein- bzw. verstellbar ist. Um durch Verunreinigungen oder Ungenauigkeiten bedingte Justierfehler so gering wie möglich zu halten, wird vorteilhaft eine Punktanlage der Stellschraube am Stellelement, insbesondere dessen Steuerschräge, angestrebt. Eine Punktanlage wird besonders einfach durch eine runde Fläche erreicht. Hierzu kann das der Steuerfläche gegenüberliegende Ende des vorzugsweise als Stellschraube ausgebildeten Stellglieds abgerundet sein.

Dadurch, dass sich die Stelleinrichtung des erfindungsgemäßen Zerspanungswerkzeugs sowohl in Querrichtung zur Drehachse des Grundkörpers als auch in Querrichtung zur Verschieberichtung des Schneidenträgers erstreckt, ist eine bauraumsparende Anordnung der Schneidenträger in axialer Richtung, d.h. in Längsrichtung, des Zerspanungswerkzeugs möglich, sodass eine hohe Anzahl von Schneidenträgern und somit eine hohe Anzahl von Schneiden/Schneidelementen auf engem Raum (in axialer Richtung bzw. Längsrichtung gesehen) am Zerspanungswerkzeug vorgesehen sein können. Da typischerweise unterschiedliche Schneiden/Schneidelemente für unterschiedliche Bearbeitungsschritte (z.B. Schruppen, Semifinish, Finish, Versehen mit einer Fase etc.) eingesetzt werden, können bei dem erfindungsgemäßen Zerspanungswerkzeug Schneiden für eine hohe Anzahl von Bearbeitungsschritten auf einem Abschnitt relativer kurzer axialer Ausdehnung untergebracht werden, sodass das erfindungsgemäße Zerspanungswerkzeug zum Beispiel bei der Bearbeitung von Lagerstellen einer Lagergasse beim Wechsel von einem Bearbeitungsschritt zum nächsten und somit beim Wechsel von einer Schneide zu einer anderen in Längsrichtung nur über kurze Strecken hin- und her bewegt werden muss und vorteilhafterweise nur ein einziges erfindungsgemäßes Zerspanungswerkzeug für die Bearbeitung einer Lagergasse erforderlich ist. D.h. es muss nicht zwischen unterschiedlichen Zerspanungswerkzeugen mit für unterschiedliche Bearbeitungsschritte ausgebildeten Schneidenträgern/Schneidelementen gewechselt werden.

Im Folgenden werden mit Hilfe der beigefügten Zeichnungen bevorzugte Ausführungsformen eines erfindungsgemäßen Zerspanungswerkzeugs beschrieben. Es zeigen:
Fig. 1 eine perspektivische Ansicht des erfindungsgemäßen Zerspanungswerkzeugs gemäß einer ersten Ausführungsform der Erfindung;
Fig. 2 eine perspektivische Querschnittsansicht des Zerspanungswerkzeugs gemäß der ersten Ausführungsform der Erfindung; und
Fig. 3 eine perspektivische Querschnittsansicht eines Zerspanungswerkzeugs gemäß einer zweiten Ausführungsform der Erfindung.

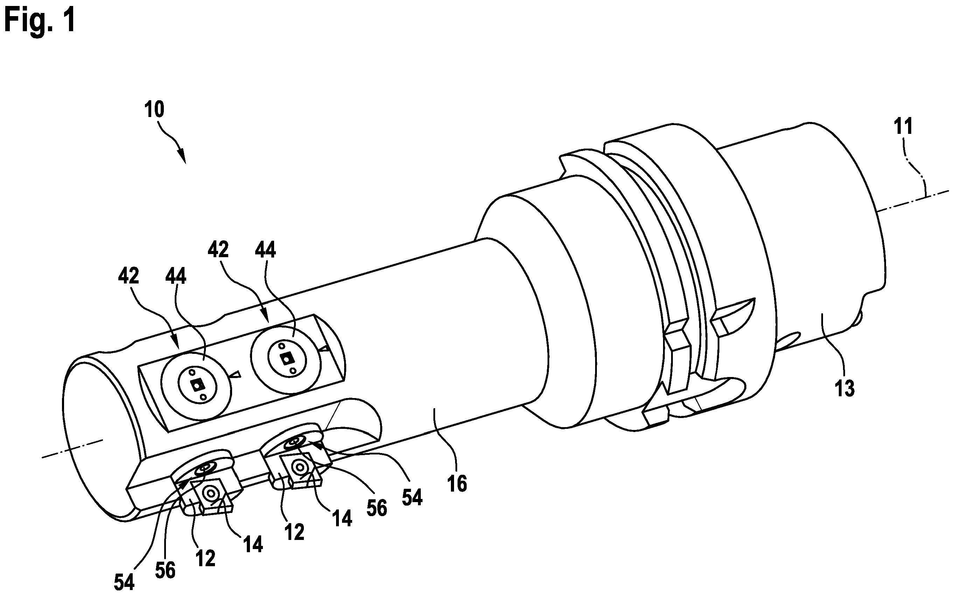

Die Fign. 1 und 2 zeigen ein Zerspanungswerkzeug 10 gemäß einer ersten Ausführungsform der Erfindung in perspektivischen Ansichten. Das Zerspanungswerkzeug 10 weist wenigstens einen Schneidenträger 12 mit einem Schneidelement 14 auf. Das Schneidelement 14 kann von einer Schneidplatte, insbesondere einer Wendeschneidplatte, gebildet sein. Alternativ kann der Schneidenträger 12 als Schneidelement statt der Schneidplatte beispielsweise einen Schneideinsatz, eine Schneidleiste, etc. tragen. Das Schneidelement 14 weist jedenfalls wenigstens eine geometrisch bestimmte Schneide zur spanabhebenden Bearbeitung einer zugeordneten Bearbeitungsstelle, insbesondere einer Lagestelle, auf. Das Zerspanungswerkzeug 10 ist vorzugsweise mit einer nicht dargestellten Kühlung bzw. Kühlmittelzufuhr versehen.

Zur Bearbeitung von mehreren Lagerstellen einer Lagergasse (nicht dargestellt) weist das Zerspanungswerkzeug 10 vorzugsweise mehrere Schneidenträger 12 mit Schneidelementen 14 auf, die in axialer Richtung bzw. in Längsrichtung des Zerspanungswerkzeugs 10, d.h. parallel zur nicht näher bezeichneten Dreh- bzw. Längsmittelachse des Zerspanungswerkzeugs 10, beabstandet bevorzugt in einer Reihe angeordnet sind. Die Schneidelemente 14 können dabei zur Schrupp-, SEMIFinish-, FINISH-Bearbeitung und, falls gewünscht, zum Versehen eines Werkstücks mit Fasen vorgesehen und ausgestaltet sein. Die axialen Abstände, in denen die Schneidelemente 14 angeordnet sind, entsprechen den Abständen, in denen die zu bearbeiteten Werkstücke bzw. Werkstückbereiche, beispielsweise die Lagerstege einer Lagergasse, angeordnet sind. Eine derartige Lagergasse befindet sich beispielsweise in einem zu bearbeitenden Zylinderkurbelgehäuse eines Verbrennungsmotors. Das erfindungsgemäße Zerspanungswerkzeug 10 kann daher als ein Lagergassenwerkzeug oder allgemein als Bohrungsnachbearbeitungs- oder Bohrungsfeinbearbeitungswerkzeug eingesetzt werden.

Das erfindungsgemäße Zerspanungswerkzeug 10 weist einen um eine nicht näher bezeichnete Dreh- oder Längsmittelachse (in Fig. 1: Bezugsziffer 11) des Zerspanungswerkzeugs 10 drehantreibbaren Grundkörper 16 (auch Werkzeugschaft genannt) auf, der in der gezeigten Ausführungsform beispielhaft als eine Bohrstange ausgebildet ist. Der Grundkörper 16 hat an seinem hinteren Ende eine werkzeugmaschinenspindelseitige Schnittstelle 13, die in der gezeigten Ausführungsform einen sogenannten HSK(Hohlschaftkegel)-Schaft hat. Alternativ dazu kann beispielsweise ein sogenannter SK(Steilkegel)-Schaft oder dergleichen vorgesehen sein.

Der Schneidenträger 12 ist in einer in dem Grundkörper 16 vorgesehenen Führungsaussparung 18 aufgenommen, wobei sich die Führungsaussparung 18 senkrecht zur Drehachse des Grundkörpers 16 bzw. des Zerspanungswerkzeugs 10 erstreckt. Der Schneidenträger 12 ist in der Führungsaussparung 18 quer zur Drehachse des Grundkörpers 16, insbesondere radial, verschiebbar angeordnet. In der in Fig. 2 gezeigten Ausführungsform weisen der Schneidenträger 12 und entsprechend die Führungsaussparung 18 einen in Erstreckungsrichtung im Wesentlichen T-förmigen Querschnitt auf. Der Schneidenträger 12 lässt sich daher nur von einer Seite in die Führungsaussparung 18 einsetzen und ist darin formschlüssig und verdrehsicher aufgenommen. Zwei Druckfedern 19 federn den Schneidenträger 12 gegenüber dem Grundkörper 16 ab. Zur Aufnahme der Druckfedern 19 ist im Grundkörper 16 eine Ausnehmung 25 vorgesehen, die die Führungsaussparung 18 auf einer Seite in ihrer Erstreckungsrichtung zur Aufnahme des Schneidenträgers 12 erweitert.

An seinem einen Ende weist der Schneidenträger 12 einen nicht näher bezeichneten Schneidelementsitz zur Aufnahme des Schneidelements 14 auf. An seinem anderen, gegenüberliegenden Ende ist eine Buchse 15 in den Schneidenträger 12 eingepresst.

Dem Schneidenträger 12 ist eine Stelleinrichtung 28 zugeordnet, um den Schneidenträger 12 und somit das Schneidelement 14 in dessen Verschieberichtung quer zur Drehachse des Grundkörpers 16 in der Führungsaussparung 18 zu verschieben. Der Schneidenträger 12 weist einen Durchbruch 30 auf, durch welchen die Stelleinrichtung 28 lose, d.h. mit Spiel, durchgeführt wird, sodass die Stelleinrichtung 28 im Schneidenträger 12 quer zur Drehachse des Grundkörpers 16 und quer zur Verschieberichtung des Schneidenträgers 12 angeordnet ist. D.h. der Durchbruch 30 verläuft einerseits senkrecht zur Führungsaussparung 18 und andererseits senkrecht zur Drehachse des Grundkörpers 16. Der Durchbruch 30 weist bevorzugt einen rechteckigen, insbesondere einen quadratischen, Querschnitt auf. Zumindest in Verschieberichtung des Schneidenträgers 12 ist zwischen der Stelleinrichtung 28 (bzw. deren später beschriebenem Stellelement 32) und der Innenwand des Durchbruchs 30, vorzugsweise auf beiden Seiten, ein Spielraum (auch Freiraum genannt) vorgesehen, sodass der Schneidenträger 12 in dessen Verschieberichtung in diesem Spielraum in der Führungsaussparung 18 verschoben werden kann.

Die Stelleinrichtung 28 weist ein vorzugsweise als axial verschiebbare Gewindehülse ausgestaltetes Stellelement 32 und einen Gewindetrieb mit einer Antriebsspindel 34 auf. Unter der axialen Verschiebbarkeit der Gewindehülse 32 wird eine Verschiebbarkeit entlang der Längsachse des Durchbruchs 30, d.h. senkrecht zur Drehachse des Grundkörpers 16 und senkrecht zur Verschieberichtung des Schneidenträgers 12 verstanden. Bevorzugt umfasst der Gewindetrieb ferner eine feststehende Gewindebuchse 36 (auch Lagerbuchse genannt), die fest, d.h. verdrehsicher und unverschiebbar, im Grundkörper 16 in einer Ausnehmung 38 angeordnet ist, die sich wie der Durchbruch 30 quer zur Drehachse des Grundkörpers 16 und quer zur Verschieberichtung des Schneidenträgers 12 erstreckt und zum Inneren der Führungsaussparung 18 hin geöffnet ist. Zur festen Verankerung der Gewindebuchse 36 im Grundkörper 16 kann die Gewindebuchse 36 in ihrem Außenumfang eine nichtringförmige Einbuchtung 37 aufweisen, auf die ein von außerhalb des Grundkörpers 16 betätigbarer Stift 39 drückt, welcher insbesondere als Pressstift ausgestaltet ist. Die Gewindebuchse 36 kann auch durch eine Presspassung, Löten, Kleben oder dergleichen dreh- und axialfest im Grundkörper 16 verankert sein.

Die Ausnehmung 38 nimmt ferner das in der Gewindebuchse 36 befindliche Ende der Antriebsspindel 34 und vorzugsweise ein ggfs. über den Durchbruch 30 in Richtung auf die Gewindebuchse 36 hinausragendes Ende der Gewindehülse 32 auf. Auf der gegenüberliegenden Seite des Durchbruchs 30 kann ebenfalls eine Ausnehmung 41, die auf die Ausnehmung 38 ausgerichtet ist und zum Inneren der Führungsaussparung 18 hin offen ist, zur Aufnahme eines aus dem Durchbruch 30 herausragenden Endes der Antriebsspindel 34 und ggfs. eines aus dem Durchbruch 30 herausragenden Endes der drehbar und axial verschiebbar gelagerten Gewindehülse 32 vorgesehen sein.

Die Antriebsspindel ist vorzugsweise als Differentialgewindespindel 34 (auch Differentialgewindeschraube genannt) ausgestaltet und weist einen ersten Gewindeabschnitt 34a und einen zweiten Gewindeabschnitt 34b auf. Der erste Gewindeabschnitt 34a ist mit einer nicht näher bezeichneten Gewindebohrung der Gewindehülse 32 verschraubt, während der zweite Gewindeabschnitt 34b mit einer nicht näher bezeichneten Gewindebohrung der Gewindebuchse 36 verschraubt ist. Der erste Gewindeabschnitt 34a und der zweite Gewindeabschnitt 34b haben ungleiche Gewindesteigungen (Ganghöhen), aber gleiche Gewinderichtungen (Gangrichtungen). Bei einer Drehbetätigung der Differentialgewindespindel 34 bewegt sich die Gewindehülse 32 daher entlang der nicht näher bezeichneten Spindelachse der Differentialgewindespindel 34 um eine Strecke, die dem Steigungsunterschied der beiden Gewindeabschnitte 34a, 34b der Differentialgewindespindel 34 entspricht. Die Spindelachse erstreckt sich senkrecht der Verschieberichtung des Schneidenträgers 12 und senkrecht der Drehachse des Grundkörpers 16. Aufgrund des Steigungsunterschieds kann die Gewindehülse 34 durch Verdrehung der Differentialgewindespindel 34 sehr präzise verschoben werden. So können die Gewindesteigungen der Gewindeabschnitte 34a, 34b beispielsweise so festgelegt sein, dass die Gewindehülse 34 pro Umdrehung der Differentialgewindespindel 34 um 0,1 mm verschoben wird. Für eine solche Verschiebung kann die Gewindebuchse 36 insbesondere eine Steigungsschräge von 5,75° aufweisen. Der Stelleinrichtung 28 bzw. deren Differentialgewindespindel 34 ist vorzugsweise eine Schmiermittelzufuhr zugeordnet.

Zur Drehbetätigung ist die Antriebsspindel bzw. die Differentialgewindespindel 34 an ihrem gewindebuchsenfernen Ende mit einem Betätigungselement 42 drehfest, in axialer Richtung aber verschiebbar verbunden. Das Betätigungselement 42 umfasst in dem gezeigten Ausführungsbeispiel im Besonderen einen Skalenring 44 und ist in einer entsprechenden Aufnahme 46 im Grundkörper 16, vorzugsweise über einen Federring, drehbar gelagert. D.h. das Betätigungselement 42 mit dem Skalenring 44 ist in der Aufnahme 46 drehbeweglich gelagert. Der Skalenring 44 ist vorzugsweise in einer nicht dargestellten Ausnehmung im Betätigungselement 42 angeordnet. Die Aufnahme 46 ist vorzugsweise auf die Ausnehmung 38 für die Gewindebuchse 36 und auf die dieser gegenüberliegende Ausnehmung 41 für die Differentialgewindespindel 34 (und ggfs. die Gewindehülse 32) ausgerichtet und geht bevorzugt in die Ausnehmung 41 über. Das Betätigungselement 42 fungiert somit als Längskupplung für die Antriebs- bzw. Differentialgewindespindel 34. Der Skalenring 44 kann beispielsweise 10 Marken/Markierungen aufweisen, sodass eine Zustell-/Einstellgenauigkeit von insbesondere 0,001 mm im Halbmesser erzielt werden kann. Durch die Aufnahme 46 kann ein Benutzer das Betätigungselement 42 bzw. dessen Skalenring 44 von außerhalb des Zerspanungswerkzeugs 10 bedienen.

Das insbesondere als Gewindehülse 32 ausgebildete Stellelement weist eine Steuerschräge 50 auf, an welcher sich der Schneidenträger 12 abstützt. Die Steuerschräge 50 bildet mit der Drehachse der Differentialgewindespindel 34 einen schiefen Winkel, insbesondere einen spitzen Winkel. Wird nun die Differentialgewindespindel 34 mittels des Betätigungselements 42 gedreht, so verschiebt sich das Stellelement bzw. die Gewindehülse 32 entlang der Drehachse/Spindelachse der Differentialgewindespindel 34. Dabei verschiebt sich die Steuerschräge 50 des Stellelements 32 ebenfalls entlang der Drehachse/Spindelachse der Differentialgewindespindel 34. Der sich an der Steuerschräge 50 abstützende Schneidenträger 12 wird durch die formschlüssige Anordnung des Schneidenträgers 12 in der Führungsaussparung 18 an einer Bewegung entlang der Drehachse der Differentialgewindespindel 34 gehindert und bei Verschiebung der Steuerschräge 50 entlang der Spindelachse aufgrund seiner federnden Lagerung senkrecht dazu und außerdem senkrecht zur Drehachse des Grundkörpers 16 in der Führungsaussparung 18 verschoben, sodass das Schneidelement 14 entweder in radialer Richtung vom Grundkörper 16 weg oder auf diesen zu (oder je nach Ausgestaltung sogar in diesen hinein) bewegt wird. Diese radiale Verschiebung erfolgt vorteilhafterweise ohne Drehung des Schneidelements 14 bzw. von dessen Schneide um die Drehachse des Grundkörpers 16 herum, sodass eine präzise Einstellung des Schneidelements 14 von dessen Schneide erzielt werden kann.

Vorzugsweise weist der Schneidenträger 12 der Steuerschräge 50 gegenüberliegend und dem Schneidelement 14 abgewandt ein Stellglied 52 auf, welches sich vorzugsweise in Verschieberichtung des Schneidenträger 12 erstreckt und sich mit seinem dem Schneidelement 14 abgewandten Ende, welches vorzugsweise als abgerundete Keilfläche ausgebildet ist, an der Steuerschräge 50 abstützt. Die gezeigte Ausführungsform zeichnet sich durch einen Punktkontakt zwischen der stirnseitigen runden Keilfläche des Stellgliedes und der Steuerschräge 50 aus, der einen geringen Verschmutzungsgrad und eine besonders genaue Einstellung des Schneidenträgers 12 in dessen Verschieberichtung gewährleistet. Wird die Differentialgewindespindel 34 mittels des Betätigungselements 42 gedreht und verschiebt sich somit die Steuerschräge 50 in senkrechter Richtung zur Verschieberichtung des Schneidenträgers 12, so werden das Stellglied 52 und über das Stellglied 52 der gesamte Schneidenträger 12 senkrecht zur Drehachse des Grundkörpers 16 und senkrecht zur Drehachse der Differentialgewindespindel 34 verschoben. Bei dem erfindungsgemäßen Zerspanungswerkzeug 10 wird der Schneidenträger 12 nur über die Druckfedern 19, das Zusammenwirken von Stellelement/Gewindehülse 32 bzw. dessen Steuerschräge 50 mit dem Stellglied 52 und dem auftretenden Schnittdruck der Zerspanung in dessen Position gehalten.

Das Stellglied 52 ist vorzugsweise Teil einer zusätzlich zu der Stelleinrichtung 28 vorgesehenen Justiereinrichtung 54, welches insbesondere dazu dient, die Position des Schneidenträgers 12 gegenüber dem Stellelement 32 (insbesondere dessen Steuerschräge 50) bei der Herstellung des Zerspanungswerkzeugs 10 voreinzustellen.

Zu diesem Zweck ist jedem Schneidenträger 12 des erfindungsgemäßen Zerspanungswerkzeugs 10 zusätzlich zu der Stelleinrichtung 28, die insbesondere zur Feinsteinstellung beispielsweise im Bereich von 0,2 mm bis 0,5 mm dient, eine Justiereinrichtung 54 zugeordnet, über die der Schneidenträger 12 gegenüber dem Stellelement 32 individuell in radialer Richtung des Grundkörpers 16 justierbar ist.

Wie oben erwähnt, umfasst die Justiereinrichtung 54 das Stellglied 52, welches vorzugsweise senkrecht zur Drehachse des Grundkörpers 16 und senkrecht zur Drehachse/Spindelachse der Antriebspindel/Differentialgewindespindel 34 verstellbar ist. Das Stellglied 52 ist hierfür vorzugsweise als Stellschraube, insbesondere als Abdrückschraube, ausgebildet, die sich an der Steuerschräge 50 des Stellelements bzw. der Gewindehülse 32 abstützt und in Verschieberichtung des Schneidenträgers 12 verstellbar ist. Die Stellschraube 52 ist über eine Gewindebuchse 56 (auch Justiereinrichtungsgewindebuchse oder Justiergewindebuchse genannt) in den Schneidenträger 12 integriert, die drehfest und unverschiebbar im Schneidenträger 12 befestigt ist und sich ebenfalls in Verschieberichtung des Schneidenträgers 12 erstreckt. Auf die Stellschraube 52 kann von außerhalb des Grundkörpers 16 bzw. der Zerspanungswerkzeugs 10 durch das schneidelementseitige Ende der Gewindebuchse 56 insbesondere mittels eines nicht dargestellten Stellschlüssels zugegriffen werden, der mit einer Skalierung versehen sein kann. Durch Drehen der Stellschraube 52 und somit Verschiebung des Stellglieds 52 in Verschieberichtung des Schneidenträgers 12 können die Position des Schneidenträgers 12 relativ zum Stellelement 32 und somit der Bearbeitungsdurchmesser des Zerspanungswerkzeugs 10 insbesondere bei der Voreinstellung eingestellt oder auch später verändert werden. Durch Drehen der sich an der Steuerschräge 50 abstützenden Stellschraube 52 wird der Schneidenträger 12 in seiner Verschieberichtung innerhalb der Führungsaussparung 18 bewegt. Die Ausgestaltung von Schneidenträger 12 und Stellglied/Stellschraube 52 ist insbesondere derart, dass eine Veränderung des Bearbeitungsdurchmessers bis zu 4 mm möglich ist.

Die Gewindebuchse 56 der Justiereinrichtung 54 ist vorzugsweise geschlitzt, d.h. in verschiedene Segmente geschlitzt (segmentgeschlitzt bzw. wandsegmentgeschlitzt), ausgeführt, wobei ein Gewindestift 58 vorgesehen ist, über welchen das Gewindespiel der Gewindebuchse 56 derart eingestellt werden kann, dass kein störendes Gewindespiel vorhanden, jedoch eine Betätigung/Verstellung des Stellglieds/der Stellschraube 52 noch möglich ist.

Die Gewindebuchse 56 weist vorzugsweise einen nicht näher bezeichneten, die Gewindebuchsenwand durchdringenden U-förmigen Schlitz auf, durch welchen in der Gewindebuchse 56 ein sich in axialer Richtung der Gewindebuchse 56 erstreckendes Wandsegment ausgebildet wird, das über ein Materialgelenk derart mit der restlichen Gewindebuchsenwand verbunden ist, dass es in radialer Richtung der Gewindebuchse elastisch, insbesondere nach innen, verformbar ist. An ihrem stelleinrichtungsseitigen Ende weist die Gewindebuchse 56 einen Flansch 57 auf, der an einem nicht näher bezeichneten Anschlag des Schneidenträgers 12 anliegt.

Der Gewindestift 58 ist seitlich der Gewindebuchse 56 sich parallel zu der Drehachse der Antriebsspindel/Differentialgewindespindel 34 erstreckend in einer sich parallel zum Durchbruch 30 erstreckenden Durchgangsaussparung 60 in dem Schneidenträger 12 gelagert und kann in seiner Längsrichtung verschoben werden. Die Durchgangsaussparung 60 ist am Außenumfang des Schneidenträger 12 offen, sodass insbesondere vor Einführen des Schneidenträgers 12 in die Führungsaussparung 18 zum Beispiel mittels eines entsprechenden Stellschlüssels auf den Gewindestift 58 zugegriffen werden und mittels diesem das Gewindespiel der Gewindebuchse 56 eingestellt werden kann. Nach Einstellung des Gewindespiels mittels des Gewindestifts 58 und nach Voreinstellung/Justierung der Lage des Schneidenträgers 12 in Bezug auf das Stellelement 32 in Verschieberichtung des Schneidenträgers 12 mittels der Stellschraube 52 kann die Stellschraube 52 festgelegt werden.

Wie in Fig. 2 gezeigt, ist in der in den Schneidenträger 12 eingepressten Buchse 15 ein Fixierelement 17 in der Form eines Gewindestifts eingeschraubt. Der Gewindestift 17 weist einen Innensechskant zum Ansetzen eines Innensechkantschlüssels auf, so dass der Gewindestift 17 schnell und einfach von einem Benutzer des Werkzeugs 10 relativ zum Schneidenträger 12 verstellt werden kann. Der Gewindestift 17 hat an seinem dem Schneidelement 14 zugewandten Ende eine abgerundete Keilfläche und ist an einer Schrägfläche 51 am Stellelement 32 durch einen Punktkontakt abgestützt. Mit dem Zerspanungswerkzeug 10 ist es daher möglich, den Schneidenträger 12 nach seiner Lagejustierung mittels Stelleinrichtung 28 und Justiereinrichtung 54 gegenüber dem Grundkörper 16 in seiner Lage zu fixieren. Konkret wird der Schneidenträger 12 durch den Gewindestift 17 und die Stellschraube 52, die aus entgegengesetzten Richtungen an der Steuerschräge 50 bzw. Schrägfläche 51 anliegen, in einer relativ zum Stellelement 32 fixierten Position gehalten.

Dadurch können im Vergleich zu einem Werkzeug, bei dem der Schneidenträger federnd gegenüber dem Grundkörper abgestützt ist, im Betrieb des Zerspanungswerkzeugs entstehende Fliehkräfte aufgefangen werden. Insbesondere bei hoher Drehgeschwindigkeit bzw. Drehzahl des Werkzeugs kann sich ohne die Lagefixierung des Schneidenträgers gegenüber dem Grundkörper aufgrund der Fliehkräfte die relative Lage des Schneidelements gegenüber dem Grundkörper bzw. dem Zerspanungswerkzeug ändern, wodurch Bearbeitungsungenauigkeiten entstehen können. Bei fixierter Lage des Schneidenträgers gegenüber dem Grundkörper kann hingegen eine hohe Bearbeitungsqualität gewährleistet werden.

In der gezeigten Ausführungsform weist die Schrägfläche 51 dieselbe Steigung (gegenüber einer nicht gezeigten Längsmittelachse des Stellelements 32) wie die Steuerschräge 50 auf, d.h. sie liegt gegenüber der und verläuft parallel zur Steuerschräge 50. Dadurch ist es möglich, die relative Lage des Schneidenträgers 12 gegenüber dem Grundkörper 16 auch bei an der Schrägfläche 51 des Stellelements 32 abgestütztem Fixierelement 17 einzustellen oder nachzujustieren, wenn das Stellelement 32 quer zur Verschieberichtung des Schneidenträgers 12 verstellt wird.

Die Fig. 3 zeigt ein Zerspanungswerkzeug 110 gemäß einer zweiten Ausführungsform in einer perspektivischen Querschnittsansicht. Das Zerspanungswerkzeug 110 unterscheidet sich von dem Zerspanungswerkzeug 10 gemäß der ersten Ausführungsform lediglich dadurch, dass der Schneidenträger 112 nicht mehr federnd gegenüber dem Grundkörper 116 abgestützt ist. Der Querschnitt des Schneidenträgers 112 senkrecht zu seiner Erstreckungsrichtung ist daher so ausgebildet, dass der Schneidenträger 112 von beiden Seiten in die Führungsaussparung 18 eingesetzt werden kann.

Das Zerspanungswerkzeug 110 gemäß der zweiten Ausführungsform zeichnet sich durch eine einfachere Bauweise aus, da eine Ausnehmung im Grundkörper 116 zur Aufnahme von Druckfedern entfällt. Dafür muss ein Benutzer bei der Voreinstellung der radialen Lage des Schneidenträgers 112 mittels der Justiereinrichtung 54 gegebenenfalls manuell eine Kraft auf den Schneidenträger 112 ausüben, die die Stellschraube 52 gegen die Steuerschräge 50 drückt. Nach der Lagejustierung des Schneidenträgers 112 mittels der Stelleinrichtung 28 und der Justiereinrichtung 54 kann der Schneidenträger 112 durch Anziehen des Gewindestifts 17 gegenüber dem Grundkörper 116 fixiert werden.

Abgesehen von einer spanenden Bearbeitung einer Lagergasse kann das erfindungsgemäße Zerspanungswerkzeug für jedwede Nachbearbeitung oder Feinbearbeitung einer Bohrung auf einen vorgegebenen Nenndurchmesser verwendet wird. Das erfindungsgemäße Zerspanungswerkzeug kann daher auch für die Bearbeitung einer Kolbenbohrung in einem Zylinderkurbelgehäuse oder dergleichen eingesetzt werden. In diesem Fall kann es genügen, wenn das Zerspanungswerkzeug nur einen einzigen Schneidenträger 12, 112 aufweist.

Ferner sind bei der gezeigten Ausführungsform, wie sie insbesondere in Fig. 1 dargestellt ist, mehrere Schneidenträger bzw. Schneidelemente in vorgegebenen axialen Abständen entlang des Grundkörpers des Zerspanungswerkzeugs in einer Reihe angeordnet. Die Anordnung in einer Reihe ist jedoch nicht zwingend. Die in den vorgegebenen axialen Abständen angeordneten Schneidenträger können in Umfangsrichtung voneinander versetzt, beispielsweise wendelförmig, angeordnet sein, wobei dann den jeweiligen Schneidenträgern zugeordnete Stelleinrichtungen bzw. Stellelemente senkrecht zu der Verschieberichtung des ihnen zugeordneten Schneidenträgers ausgerichtet/angeordnet sind. Durch die in Umfangsrichtung versetzte Anordnung können je nach Einsatzgebiet des Zerspanungswerkzeugs die axialen Abstände zwischen den Schneidenträgern weiter verkürzt und am Grundkörper noch mehr Schneidenträger angeordnet werden. Die in Umfangsrichtung versetzte Anordnung bietet daher eine größere Gestaltungsflexibilität.

## Patentansprüche

1. Zerspanungswerkzeug mit einem um eine Drehachse drehantreibbaren Grundkörper (16; 116), wenigstens einem am Grundkörper (16; 116) radial einstellbar angeordneten Schneidenträger (12; 112) und einer Stelleinrichtung (28) zur Einstellung der Lage des Schneidenträgers (12; 112) gegenüber dem Grundkörper (16; 116), wobei
der Schneidenträger (12; 112) in einer Führungsaussparung (18) im Grundkörper (16; 116) radial zur Drehachse verschiebbar angeordnet ist, und
die Stelleinrichtung (28) ein im Grundkörper (16; 116) quer zur Drehachse und quer zur Verschieberichtung des Schneidenträgers (12; 112) verstellbares Stellelement (32) aufweist, an dem der Schneidenträger (12; 112) durch eine in den Schneidenträger (12; 112) integrierte Justiereinrichtung (54) justierbar abgestützt ist, **dadurch gekennzeichnet, dass**
der Schneidenträger (12; 112) ein Fixierelement (17) aufweist, das den lagejustierten Schneidenträger (12; 112) gegenüber dem Grundkörper (16; 116) fixiert, wobei das Fixierelement (17) am Stellelement (32) abgestützt ist.

2. Zerspanungswerkzeug nach Anspruch 1, **dadurch gekennzeichnet, dass** das Stellelement (32) eine Schrägfläche (51) aufweist, an der das Fixierelement (17) abgestützt ist.

3. Zerspanungswerkzeug nach Anspruch 1 oder 2, **dadurch gekennzeichnet, dass** das Fixierelement (17) aus einem Gewindestift gebildet ist.

4. Zerspanungswerkzeug nach Anspruch 3, **dadurch gekennzeichnet, dass** der Gewindestift mit einer im Schneidenträger (12; 112) festgelegten Buchse (15) verschraubt ist.

5. Zerspanungswerkzeug nach einem der vorhergehenden Ansprüche, **dadurch gekennzeichnet, dass** der Schneidenträger (12; 112) in der Führungsaussparung (18) formschlüssig aufgenommen ist.

6. Zerspanungswerkzeug nach einem der vorhergehenden Ansprüche, **dadurch gekennzeichnet, dass** der Schneidenträger (12; 112) in der Führungsaussparung (18) verdrehsicher aufgenommen ist.

7. Zerspanungswerkzeug nach Anspruch 6, **dadurch gekennzeichnet, dass** der Schneidenträger (12; 112) ein rechteckiges Querschnittsprofil aufweist.

8. Zerspanungswerkzeug nach einem der vorhergehenden Ansprüche, **dadurch gekennzeichnet, dass** die Führungsaussparung als eine Durchgangsaussparung (18) ausgebildet ist.

9. Zerspanungswerkzeug nach Anspruch 8, **dadurch gekennzeichnet, dass** der Schneidenträger (12; 112) einen sich quer zur Drehachse und quer zur Verschieberichtung erstreckenden Durchbruch (30) aufweist, in dem das Stellelement (32) aufgenommen ist.

10. Zerspanungswerkzeug nach einem der vorhergehenden Ansprüche, **dadurch gekennzeichnet, dass** der Schneidenträger (12) gegenüber dem Grundkörper (16) elastisch, vorzugsweise federnd, abgestützt ist.

11. Zerspanungswerkzeug nach einem der vorhergehenden Ansprüche, **dadurch gekennzeichnet, dass** die Stelleinrichtung (28) einen das Stellelement (32) antreibenden Gewindetrieb (34, 36) aufweist.

12. Zerspanungswerkzeug nach Anspruch 11, **dadurch gekennzeichnet, dass**
das Stellelement aus einer Gewindehülse (32) mit einer Steuerschräge (50) gebildet ist, an der der Schneidenträger (12; 112) abgestützt ist, und
der Gewindetrieb (34, 36) eine mit der Gewindehülse (32) verschraubte, am Grundkörper (16; 116) gelagerte Antriebsspindel (34) aufweist.

13. Zerspanungswerkzeug nach Anspruch 12, **dadurch gekennzeichnet, dass**
der Gewindetrieb (34, 36) eine im Grundkörper (16; 116) in einem Abstand zur Gewindehülse (32) festgelegte Gewindebuchse (36) aufweist, und
die Antriebsspindel als eine Differentialgewindespindel (34) ausgebildet ist, die mit einem ersten Gewindeabschnitt (34a) mit der Gewindehülse (32) und mit einem zweiten Gewindeabschnitt (34b) mit der Gewindebuchse (36) verschraubt ist.

14. Zerspanungswerkzeug nach Anspruch 13, **dadurch gekennzeichnet, dass** zwischen der Gewindehülse (32) und der Gewindebuchse (36) eine Druckfeder angeordnet ist.

15. Zerspanungswerkzeug nach Anspruch 13 oder 14, **dadurch gekennzeichnet, dass** die Stelleinrichtung (28) ein am Grundkörper (16; 116) drehbeweglich gehaltenes Betätigungselement (42) aufweist, das mit der Differentialgewindespindel (34) drehfest und in Verschieberichtung der Gewindehülse (32) verschiebbar verbunden ist.

16. Zerspanungswerkzeug nach einem der vorhergehenden Ansprüche, **dadurch gekennzeichnet, dass** die Justiereinrichtung (54) eine den Schneidenträger (12; 112) an dem Stellelement (32) abstützende Stellschraube (52) aufweist.

17. Zerspanungswerkzeug nach einem der vorhergehenden Ansprüche, **gekennzeichnet durch** eine Vielzahl von Schneidenträgern (12; 112), die jeweils in einer Führungsaussparung (18) im Grundkörper (16; 116) quer zur Drehachse, vorzugsweise radial, verschiebbar angeordnet und an einem zugeordneten Stellelement (32) abgestützt sind.

18. Zerspanungswerkzeug nach Anspruch 17, **dadurch gekennzeichnet, dass** die Schneidenträger (12; 112) individuell einstellbar sind.

19. Zerspanungswerkzeug nach Anspruch 17 oder 18, **dadurch gekennzeichnet, dass** die Schneidenträger (12; 112) in verschiedenen Abständen zur Drehachse lageeinstellbar angeordnet sind.

## Claims

1. A cutting tool comprising a base body (16; 116) configured to be driven in rotation about an axis of rotation, at least one cutting element carrier (12; 112) arranged on the base body (16; 116) so as to be radially adjustable, and a positioning device (28) for adjusting the position of the cutting element carrier (12; 112) relative to the base body (16; 116), wherein
the cutting element carrier (12; 112) is arranged in a guide recess (18) in the base body (16; 116) so as to be displaceable radially relative to the axis of rotation, and wherein
the positioning device (28) comprises an adjusting element (32) which is adjustable in the base body (16; 116) transversely to the axis of rotation and transversely to the direction of displacement of the cutting element carrier (12; 112), the cutting element carrier (12; 112) being supported on the adjusting element (32) so as to be adjustable by an adjustment device (54) integrated into the cutting element carrier (12; 112), **characterized in that**
the cutting element carrier (12; 112) comprises a fixing element (17) which fixes the position-adjusted cutting element carrier (12; 112) relative to the base body (16; 116), wherein the fixing element (17) is supported on the adjusting element (32).

2. The cutting tool according to claim 1, **characterized in that** the adjusting element (32) comprises an inclined surface (51) on which the fixing element (17) is supported.

3. The cutting tool according to claim 1 or 2, **characterized in that** the fixing element (17) is formed by a threaded pin.

4. The cutting tool according to claim 3, **characterized in that** the threaded pin is screwed into a bushing (15) fixed in the cutting element carrier (12; 112).

5. The cutting tool according to any one of the preceding claims, **characterized in that** the cutting element carrier (12; 112) is received in the guide recess (18) in a form-fitting manner.

6. The cutting tool according to any one of the preceding claims, **characterized in that** the cutting element carrier (12; 112) is received in the guide recess (18) in a manner secured against rotation.

7. The cutting tool according to claim 6, **characterized in that** the cutting element carrier (12; 112) has a rectangular cross-sectional profile.

8. The cutting tool according to any one of the preceding claims, **characterized in that** the guide recess is configured as a through-recess (18).

9. The cutting tool according to claim 8, **characterized in that** the cutting element carrier (12; 112) has a through-opening (30) extending transversely to the axis of rotation and transversely to the direction of displacement, in which opening the adjusting element (32) is received.

10. The cutting tool according to any one of the preceding claims, **characterized in that** the cutting element carrier (12) is supported elastically, preferably resiliently, relative to the base body (16).

11. The cutting tool according to any one of the preceding claims, **characterized in that** the positioning device (28) comprises a screw drive (34, 36) for actuating the adjusting element (32).

12. The cutting tool according to claim 11, **characterized in that**
the adjusting element is formed by a threaded sleeve (32) having a control bevel (50) on which the cutting element carrier (12; 112) is supported, and
the screw drive (34, 36) comprises a drive spindle (34) which is in threaded engagement with the threaded sleeve (32) and is mounted in the base body (16; 116).

13. The cutting tool according to claim 12, **characterized in that**
the screw drive (34, 36) comprises a threaded bushing (36) fixed in the base body (16; 116) at a distance from the threaded sleeve (32), and
the drive spindle is configured as a differential-thread spindle (34) which is in threaded engagement, by means of a first threaded portion (34a), with the threaded sleeve (32) and, by means of a second threaded portion (34b), with the threaded bushing (36).

14. The cutting tool according to claim 13, **characterized in that** a compression spring is arranged between the threaded sleeve (32) and the threaded bushing (36).

15. The cutting tool according to claim 13 or 14, **characterized in that** the positioning device (28) comprises an actuating element (42) rotatably mounted in the base body (16; 116), the actuating element being connected to the differential-thread spindle (34) in a rotationally fixed manner and so as to be displaceable in the direction of displacement of the threaded sleeve (32).

16. The cutting tool according to any one of the preceding claims, **characterized in that** the adjustment device (54) comprises an adjusting screw (52) which supports the cutting element carrier (12; 112) on the adjusting element (32).

17. The cutting tool according to any one of the preceding claims, **characterized by** a plurality of cutting element carriers (12; 112), each of which is arranged in a guide recess (18) in the base body (16; 116) so as to be displaceable transversely to the axis of rotation, preferably radially, and is supported on an associated adjusting element (32).

18. The cutting tool according to claim 17, **characterized in that** the cutting element carriers (12; 112) are individually adjustable.

19. The cutting tool according to claim 17 or 18, **characterized in that** the cutting element carriers (12; 112) are arranged so as to be position-adjustable at different distances from the axis of rotation.

## Revendications

1. Outil d'usinage avec un corps de base (16 ; 116) pouvant être entraîné en rotation autour d'un axe de rotation, au moins un porte-couteau (12 ; 112) disposé de manière réglable radialement sur le corps de base (16 ; 116) et un appareil de réglage (28) pour le réglage de la position du porte-couteau (12 ; 112) par rapport au corps de base (16 ; 116), dans lequel
le porte-couteau (12 ; 112) est disposé dans un évidement de guidage (18) dans le corps de base (16 ; 116) de manière déplaçable radialement par rapport à l'axe de rotation, et
l'appareil de réglage (28) présente un élément de réglage (32) pouvant être déplacé dans le corps de base (16 ; 116) transversalement à l'axe de rotation et transversalement à la direction de déplacement du porte-couteau (12 ; 112), sur lequel le porte-couteau (12 ; 112) est soutenu de manière réglable par un appareil d'ajustement (54) intégré au porte-couteau (12 ; 112), **caractérisé en ce que**
le porte-couteau (12 ; 112) présente un élément de fixation (17) qui fixe le porte-couteau (12 ; 112) à position ajustée par rapport au corps de base (16 ; 116), dans lequel l'élément de fixation (17) est soutenu sur l'élément de réglage (32).

2. Outil d'usinage selon la revendication 1, **caractérisé en ce que** l'élément de réglage (32) présente une surface inclinée (51) sur laquelle l'élément de fixation (17) est soutenu.

3. Outil d'usinage selon la revendication 1 ou 2, **caractérisé en ce que** l'élément de fixation (17) est constitué d'une tige filetée.

4. Outil d'usinage selon la revendication 3, **caractérisé en ce que** la tige filetée est vissée dans une douille (15) fixée dans le porte-couteau (12 ; 112).

5. Outil d'usinage selon l'une quelconque des revendications précédentes, **caractérisé en ce que** le porte-couteau (12 ; 112) est logé par complémentarité de forme dans l'évidement de guidage (18).

6. Outil d'usinage selon l'une quelconque des revendications précédentes, **caractérisé en ce que** le porte-couteau (12 ; 112) est logé dans l'évidement de guidage (18) de manière antirotation.

7. Outil d'usinage selon la revendication 6, **caractérisé en ce que** le porte-couteau (12 ; 112) présente un profil de section transversale rectangulaire.

8. Outil d'usinage selon l'une quelconque des revendications précédentes, **caractérisé en ce que** l'évidement de guidage est réalisé en tant qu'évidement traversant (18).

9. Outil d'usinage selon la revendication 8, **caractérisé en ce que** le porte-couteau (12 ; 112) présente une ouverture (30) s'étendant transversalement à l'axe de rotation et transversalement à la direction de déplacement, dans laquelle l'élément de réglage (32) est logé.

10. Outil d'usinage selon l'une quelconque des revendications précédentes, **caractérisé en ce que** le porte-couteau (12) est soutenu manière élastique, de préférence par un ressort, par rapport au corps de base (16).

11. Outil d'usinage selon l'une quelconque des revendications précédentes, **caractérisé en ce que** l'appareil de réglage (28) présente un mécanisme à vis (34, 36) entraînant l'élément de réglage (32).

12. Outil d'usinage selon la revendication 11, **caractérisé en ce que**
l'élément de réglage est constitué d'un manchon fileté (32) avec un chanfrein de commande (50) sur lequel le porte-couteau (12 ; 112) est soutenu, et
le mécanisme à vis (34, 36) présente une broche d'entraînement (34) vissée au manchon fileté (32) et montée sur le corps de base (16 ; 116).

13. Outil d'usinage selon la revendication 12, **caractérisé en ce que**
le mécanisme à vis (34, 36) présente une douille filetée (36) fixée dans le corps de base (16 ; 116) à une distance du manchon fileté (32), et
la broche d'entraînement est conçue en tant que broche filetée différentielle (34) qui est vissée, par une première section filetée (34a), au manchon fileté (32) et, par une seconde section filetée (34b), à la douille filetée (36).

14. Outil d'usinage selon la revendication 13, **caractérisé en ce qu'**un ressort de compression est disposé entre le manchon fileté (32) et la douille filetée (36).

15. Outil d'usinage selon la revendication 13 ou 14, **caractérisé en ce que** l'appareil de réglage (28) présente un élément d'actionnement (42) tenu par mouvement de rotation sur le corps de base (16 ; 116), qui est connecté à la broche filetée différentielle (34) de manière non rotative et de manière déplaçable dans la direction de déplacement du manchon fileté (32).

16. Outil d'usinage selon l'une quelconque des revendications précédentes, **caractérisé en ce que** l'appareil d'ajustement (54) présente une vis de réglage (52) soutenant le porte-couteau (12 ; 112) sur l'élément de réglage (32).

17. Outil d'usinage selon l'une quelconque des revendications précédentes, **caractérisé par** une pluralité de supports de porte-couteaux (12 ; 112) qui sont respectivement disposés de manière déplaçable dans un évidement de guidage (18) du corps de base (16 ; 116) transversalement à l'axe de rotation, de préférence radialement, et soutenus par un élément de réglage (32) associé.

18. Outil d'usinage selon la revendication 17, **caractérisé en ce que** les porte-couteaux (12 ; 112) sont réglables individuellement.

19. Outil d'usinage selon la revendication 17 ou 18, **caractérisé en ce que** les porte-couteaux (12 ; 112) sont disposés de manière réglable en position à différentes distances de l'axe de rotation.
